# EUROPEAN PATENT APPLICATION

(11) **EP 4 592 338 A1**
(43) Date of publication of application: **30.07.2025**
(21) Application number: 23868309.8
(22) Date of filing: 25.05.2023
(51) Int. Cl.: C08J 9/35, C08J 9/00, C08K 5/00, B05D 1/12, B05D 3/06, B05D 3/02

(54) **POROUS POLYMER STRUCTURE THROUGH ULTRASONIC SPRAYING AND MANUFACTURING METHOD THEREFOR**

(30) Priority: 22.09.2022 KR 20220119970
(71) Applicant: Agency For Defense Development, Daejeon 34060 (KR); Industry-University Cooperation Foundation Hanyang University, Seoul 04763 (KR)
(72) Inventor: KIM, Seonhong, Changwon-si Gyeongsangnam-do 51698 (KR); SONG, Simon, Seoul 04763 (KR); KIM, Dongrip, Seoul 04763 (KR); YI, Jonghun, Seoul 04763 (KR); LEE, Haeyeon, Seoul 04763 (KR)
(74) Representative: Witte, Weller & Partner Patentanwälte mbB
(86) International application number: PCT/KR2023/007216
(87) International publication number: WO 2024/063243

(57) **Abstract**

The present invention provides: a porous polymer structure through ultrasonic spraying, having, formed by ultrasonic spraying, microscale pores within or on the surface of the polymer structure; and a manufacturing method therefor.

## Description

### [Technical Field]

The present disclosure relates to a porous polymer structure with microscale pore formed within or on the surface of the polymer structure through ultrasonic spraying, and a manufacturing method therefor.

### [Background Art]

Porous structures are effectively utilized in fields requiring gas and organic solvent adsorption and separation by taking advantage of their large internal specific surface area. In addition, due to their porous membrane form, which allows easy fluid passage, they are actively applied in desalination technologies.

However, the fabrication of porous structures involves complex processes, making manufacturing cumbersome and challenging for large-area applications. Furthermore, the morphology of the fabricated structures is limited by the manufacturing method, and there are constraints in controlling porosity.

Therefore, through extensive research and dedicated efforts, the applicants of the present disclosure have developed a porous polymer structure with microscale pores formed within or on the surface of the polymer structure using an ultrasonic spraying method, as well as a manufacturing method thereof, thereby completing the present disclosure.

### [Disclosure]

### [Technical Problem]

Accordingly, a purpose of the present disclosure is to provide a porous polymer structure with microscale pores formed within or on the surface of the polymer structure using an ultrasonic spraying method.

In addition, another purpose of the present disclosure is to provide a manufacturing method for a porous polymer structure through ultrasonic spraying, wherein a spraying solution is atomized into microscale droplets, then infiltrated into a liquid polymer resin using an ultrasonic spraying method to form a porous structure, and subsequently cured to produce the porous polymer structure.

The challenges that the present disclosure is intended to solve are not limited to those mentioned above, and other challenges not mentioned will be apparent to those skilled in the art from the following description.

### [Technical Solution]

In order to achieve the purpose, an aspect of the present disclosure provides a porous polymer structure through ultrasonic spraying, the porous polymer structure comprising:
microscale pores within or on a surface of a polymer structure,
wherein the porous polymer structure with microscale pores is formed by atomizing a spraying solution into microscale droplets to produce a droplet dispersion, infiltrating the droplet dispersion into a substrate coated with a liquid polymer resin through an ultrasonic spraying method to form a porous structure, and subsequently conduct thermal curing or photochemical curing of the porous structure.

In some exemplary embodiments, a porosity of the porous polymer structure may include:
a specific surface area ranging from 10 m²/g to 1000 m²/g; and
a pore size ranging from 1 *µ*m to 500 *µ*m.

In some exemplary embodiments, a surface morphology of the porous polymer structure may include a sponge-like shape formed with pores, and a cross-sectional thickness of the porous polymer structure may range from 10 *µ*m to 5 mm.

In some exemplary embodiments, the spraying solution may include at least one solvent selected from a group consisting of water, alcohol, ketone, and glycol.

In some exemplary embodiments, the liquid polymer resin may be at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

In some exemplary embodiments, the substrate may be made of at least one selected from a group consisting of glass, plastic, porcelain, ceramic, metal, and fiber.

In some exemplary embodiments, a size of a droplet in the dispersion may range from 1 Å to 20 *µ*m.

In some exemplary embodiments, a morphology of the porous structure may vary depending on spraying amount of the droplet dispersion infiltrated into the liquid polymer resin.

In some exemplary embodiments, the ultrasonic spraying method may adjust spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

In some exemplary embodiments, the ultrasonic spraying method may employ an ultrasonic sprayer, and the ultrasonic sprayer may be at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

In some exemplary embodiments, the thermal curing may include a process of curing at a temperature of 10°C to 350°C, and the photochemical curing may include a process of curing at a temperature of 30°C to 120°C with a UV lamp intensity of 200 mJ to 3000 mJ.

In some exemplary embodiments, the thermal curing may employ at least one curing agent selected from a group consisting of water, Di-(2,4-dichlorobenzoyl)-peroxide, Dibenzoyl peroxide, Dicumyl peroxide, tert-Butylcumylperoxide, Di-tert-butylperoxide, Isophorone Diisocyanate(IPDI), 4,4'-Diphenylmethane diisocyanate (MDI), Toluene Diisocyanate (TDI), Hexamethylene diisocyanate (HDI), and HDI Buiret.

In some exemplary embodiments, the photochemical curing may employ at least one curing agent selected from a group consisting of Di-(2,4-dichlorobenzoyl)-peroxide, Dibenzoyl peroxide, Dicumyl peroxide, tert-Butylcumylperoxide, Di-tert-butylperoxide, TPO (2,4,6-Trimethylbenzoyl diphenyl phosphine oxide), TPO-L (Ethyl(2,4,6-trimethylbenzoyl)henylphosphinate), BP (Benzophenone), MBP (4-Metylbenzophenone), DEB (4,4'-Bis(diethylamino)benzophenon), BMS (4-Benzoyl-4'-Methyldiphenylsulfide), MBF (Methyl phenlglyoxylate), MBB (Methyl o-benzoylbenzoate), PBZ (4-phenylbenzophenone), BDK (Benzildimethylketal), EHA (2-Ethlhexyl-4-Dimethylaminobenzoate), EPD (Ethyl-4-Dimethylaminobenzoate), 1173 (Hydroxy-2-methylphayl-propane-1-one), 184 (1-Hydroxycyclohexylphenylketon), ITX(Isopropylthioxanthone), DETX (2,4-diethylthioxanthone), 369 (2-Benzyl-2-(dimethylamino)-1-[4-(morpholinyl)phenyl]-1-butanone), 379 (2-Dimethylamino-2-(4-methyl-benzyl)-1-(4-morpholin-4-yl-phenyl)butan-1-one), 819 (Bis(2,4,6-trimethylbenzoyl)-phenylphosphineoxide), and 1100 (Oligo [2-hydroxy-2-methyl-1-[4-(1-methylvinyl)phenyl] propanone]).

In some exemplary embodiments, an application of the porous polymer structure may include a separator, a composite material, a support, a soundproofing material, a thermal insulation material, a scaffold, or a combination thereof.

In addition, another aspect of the present disclosure provides a method for manufacturing a porous polymer structure through ultrasonic spraying, the method comprising steps of:
(a) preparing a spraying solution;
(b) preparing a substrate coated with a liquid polymer resin;
(c) atomizing the spraying solution into microscale droplets using an ultrasonic sprayer to produce a droplet dispersion;
(d) infiltrating the droplet dispersion into the substrate coated with the liquid polymer resin through an ultrasonic spraying method to form a porous structure; and
(e) conducting thermal curing or photochemical curing of the porous structure to manufacture the porous polymer structure,
wherein the ultrasonic spraying method adjusts spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

In some exemplary embodiments, in the ultrasonic spraying method,
the spraying distance may range from 1 mm to 1 m,
the spraying flow rate may range from 0.1 mL/min to 200 mL/min,
the spraying time may range from 5 seconds to 5 hours, and
the spraying pressure may range from 0.1 bar to 20 bar.

In some exemplary embodiments, in the step (a) of preparing a spraying solution,
the spraying solution may include at least one solvent selected from a group consisting of water, alcohol, ketone, and glycol.

In some exemplary embodiments, in the step (b) of preparing a substrate coated with a liquid polymer resin,
the liquid polymer resin may be at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

In some exemplary embodiments, in the step (c) of atomizing the spraying solution into microscale droplets using an ultrasonic sprayer to produce a droplet dispersion,
the ultrasonic sprayer may be at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

In some exemplary embodiments, in the step (d) of infiltrating the droplet dispersion into the substrate coated with the liquid polymer resin through an ultrasonic spraying method to form a porous structure,
a morphology of the porous structure may vary depending on the spraying amount of the droplet dispersion infiltrated into the liquid polymer resin.

In some exemplary embodiments, in the step (e) of conducting thermal curing or photochemical curing of the porous structure to manufacture the porous polymer structure,
the thermal curing may include a process of curing at a temperature of 10°C to 350°C, and the photochemical curing may include a process of curing at a temperature of 30°C to 120°C with a UV lamp intensity of 200 mJ to 3000 mJ.

### [Advantageous Effects]

According to the present disclosure, by providing a porous polymer structure formed by ultrasonic spraying, in which microscale pores are formed within or on the surface of the polymer structure using an ultrasonic spraying method, excellent physical properties are achieved, allowing its use in various structural applications.

In addition, the present disclosure provides a manufacturing method for a porous polymer structure formed by ultrasonic spraying, in which a spraying solution is atomized into microscale droplets and then infiltrated into a liquid polymer resin using an ultrasonic spraying method to form a porous structure, followed by curing to produce the porous polymer structure.

As a result, the porous polymer structure and the manufacturing method enable large-area applications, offers excellent process stability, and are cost-effective due to the lowered manufacturing cost.

The effects of the present disclosure are not limited to the aforementioned effects and should be understood to include all effects that can be inferred from the configurations of the present disclosure described in the detailed description or the claims.

### [Description of Drawings]

FIG. 1 is a process diagram of the manufacturing method for a porous polymer structure formed by ultrasonic spraying according to an exemplary embodiment of the present disclosure.
FIG. 2 is a schematic diagram of the process for the manufacturing method of a porous polymer structure formed by ultrasonic spraying according to an exemplary embodiment of the present disclosure.
FIG. 3 is scanning electron microscope (SEM) images showing the surface and cross-sectional morphology of the porous polymer structure obtained by the manufacturing method for a porous polymer structure formed by ultrasonic spraying according to an exemplary embodiment of the present disclosure.
FIG. 4 is optical microscope images and scanning electron microscope (SEM) images showing the surface and cross-sectional morphology of the porous polymer structure obtained by the manufacturing method for a porous polymer structure formed by ultrasonic spraying according to an exemplary embodiment of the present disclosure.
FIG. 5 is cross-sectional scanning electron microscope (SEM) images of the porous polymer structure according to the ultrasonic spraying time in the manufacturing method for a porous polymer structure formed by ultrasonic spraying according to an exemplary embodiment of the present disclosure.
FIG. 6 is pore size distribution graphs of the porous polymer structure depending on the ultrasonic spraying time in the manufacturing method for a porous polymer structure formed by ultrasonic spraying according to an exemplary embodiment of the present disclosure.
FIG. 7 is cross-sectional scanning electron microscope (SEM) images showing the pore size and cross-sectional morphology of the porous polymer structure depending on the ultrasonic spraying flow rate in the manufacturing method for a porous polymer structure formed by ultrasonic spraying according to an exemplary embodiment of the present disclosure.
FIG. 8 is cross-sectional scanning electron microscope (SEM) images showing the pore size and cross-sectional morphology of the porous polymer structure depending on the ultrasonic spraying pressure in the manufacturing method for a porous polymer structure formed by ultrasonic spraying according to an exemplary embodiment of the present disclosure.

### [Mode for Invention]

Hereinafter, exemplary embodiments of the present disclosure will be described in detail with reference to related drawings.

The advantages and features of the present disclosure, and methods of accomplishing those advantages and features, will become apparent upon reference to the exemplary embodiments described in detail with reference to the accompanying drawings.

However, the present disclosure is not limited by the exemplary embodiments disclosed herein, but will be embodied in many and various forms. Therefore, those exemplary embodiments are provided merely to make the present disclosure complete and to give a complete picture of the scope of the present disclosure to one of ordinary skill in the art to which the present disclosure belongs, and the present disclosure shall be defined by the scope of the claims.

Further, hereinafter, in describing the present disclosure, a detailed description of a configuration determined that may unnecessarily obscure the subject matter of the present disclosure, for example, a detailed description of a known technology including the prior art may be omitted.

Hereinafter, exemplary embodiments of the present disclosure will be described in detail.

### Porous polymer structure through ultrasonic spraying

An aspect of the present disclosure provides a porous polymer structure with microscale pores formed within or on the surface of the polymer structure through ultrasonic spraying.

According to an exemplary embodiment of the present disclosure, a porous polymer structure through ultrasonic spraying is provided, the porous polymer structure comprising:
microscale pores within or on a surface of a polymer structure,
wherein the porous polymer structure with microscale pores may be formed by atomizing a spraying solution into microscale droplets to produce a droplet dispersion, infiltrating the droplet dispersion into a substrate coated with a liquid polymer resin through an ultrasonic spraying method to form a porous structure, and subsequently conduct thermal curing or photochemical curing of the porous structure.

According to the present disclosure, by providing a porous polymer structure formed by ultrasonic spraying, in which microscale pores are formed within or on the surface of the polymer structure using an ultrasonic spraying method, excellent physical properties are achieved, allowing its use in various structural applications.

Porous structures are effectively utilized in fields requiring gas and organic solvent adsorption and separation by taking advantage of their large internal specific surface area. In addition, due to their porous membrane form, which allows easy fluid passage, they are actively applied in desalination technologies.

However, the fabrication of porous structures involves complex processes, making manufacturing cumbersome and challenging for large-area applications. Furthermore, the morphology of the fabricated structures is limited by the manufacturing method, and there are constraints in controlling porosity.

Therefore, through extensive research and dedicated efforts, the applicants of the present disclosure have developed a porous polymer structure with micreoscale pores formed within or on the surface of the polymer structure using an ultrasonic spraying method, as well as a manufacturing method thereof, thereby completing the present disclosure.

Here, a porosity of the porous polymer structure may include:
a specific surface area ranging from 10 m²/g to 1000 m²/g; and
a pore size ranging from 1 *µ*m to 500 *µ*m.

The porosity of the porous polymer structure may preferably have a specific surface area ranging from 20 m²/g to 990 m²/g, and more preferably from 30 m²/g to 980 m²/g.

Moreover, the porosity of the porous polymer structure may preferably have a pore size ranging from 2 *µ*m to 498 *µ*m, and more preferably from 5 *µ*m to 495 *µ*m.

In addition, a surface morphology of the porous polymer structure may include a sponge-like shape formed with pores, and a cross-sectional thickness of the porous polymer structure may range from 10 *µ*m to 5 mm.

Here, the cross-sectional thickness of the porous polymer structure may preferably range from 12 *µ*m to 4.9 mm, and more preferably from 15 *µ*m to 4.8 mm.

In addition, the spraying solution may include at least one solvent selected from a group consisting of water, alcohol, ketone, and glycol.

Here, the alcohol may include an alcohol having 1 to 20 carbon atoms.

In addition, the alcohol may include an amino alcohol having 1 to 20 carbon atoms.

Further, the ketone may include a ketone having 1 to 10 carbon atoms.

Moreover, the glycol may include a glycol having 1 to 20 carbon atoms.

Here, the glycol may include any one selected from a group consisting of ethylene glycol, diethylene glycol, triethylene glycol, tetraethylene glycol, and propylene glycol.

In addition, the substrate may be made of at least one selected from a group consisting of glass, plastic, porcelain, ceramic, metal, and fiber.

Further, the liquid polymer resin may be at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

Here, the liquid polymer resin may be a resin in a liquid form that is spread on the substrate.

In addition, a size of a droplet in the droplet dispersion may range from 1 Å to 20 *µ*m.

Here, the droplet size of the droplet dispersion may preferably be from 1.2 Å to 19.8 *µ*m, and more preferably from 1.5 Å to 19.5 *µ*m.

In addition, a morphology of the porous structure may vary depending on spraying amount of the droplet dispersion infiltrated into the liquid polymer resin.

Here, the shape of the porous structure may be circular, star-shaped, horn-shaped, polygonal, or polygonal-prismatic, but is not limited thereto.

Further, the ultrasonic spraying method may adjust spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

In addition, in the present disclosure, deionized water is atomized using an ultrasonic generator, forming a mist that penetrates the polymer. Since the viscosity of the liquid polymer resin is higher than that of the water droplets, the sprayed water droplets can be maintained spherical shape within the polymer. As the liquid polymer resin undergoes thermal curing or photochemical curing, a porous structure can be formed.

Here, when the liquid polymer containing infiltrated water droplets is heated, the internal water droplets evaporate while a polymerization reaction occurs, leaving behind droplet-shaped voids as the curing process progresses.

In addition, as the infiltrated water droplets evaporate while remaining entangled, the structure can exhibit a highly interconnected pore network.

In other words, the simultaneous occurrence of phase separation due to the infiltration of the solution into the liquid polymer and the polymerization reaction enables the formation of an internal interconnected pore network, thereby achieving high porosity.

Therefore, the porous structure obtained through the ultrasonic spray device can be produced over a large area using a uniform and simple process, making it applicable to various industries.

Moreover, the porous structure fabricated using the ultrasonic spray device is created by spraying a solution that does not mix well with the material intended for the porous structure. This characteristic ensures that the manufacturing conditions are not stringent, allowing the method to be applied to various materials and enabling production in multiple forms.

In addition, the porous structure manufactured using the ultrasonic spray device involves dispersing a atomized solution onto a liquid polymer material through ultrasonic or pneumatic spraying, enabling the production of a structure with an internal interconnected pore network.

Furthermore, depending on the properties of the polymer, various solutions can be used to form different structures, allowing the formation of interconnected pore networks in various materials. The ability to design the desired pore structure according to the spraying conditions makes this method particularly useful in industrial fields requiring porous structure design, such as separators or composite materials.

Further, in the present disclosure, by modifying the spraying conditions of the ultrasonic spray, the pore sizes and distributions can be controlled.

Here, the ultrasonic spraying method allows for variations in droplet size and distribution depending on factors such as spraying distance, spraying flow rate, spraying pressure, and spraying time.

In particular, as the spraying time increases, repeatedly infiltrated water droplets through ultrasonic spraying coalescence, leading to an increase in pore size. During the curing process, the water droplets evaporate, causing the liquid polymer to cure in an expanded state, resulting in increased thickness.

In addition, as the spraying flow rate increases, the size of the water droplets sprayed through ultrasonic spraying also increases, allowing relatively larger water droplets to infiltrate the liquid polymer.

Furthermore, as the spraying pressure increases the ejection velocity of sprayed water droplet increases, allowing deeper penetration into the liquid polymer, thereby enabling control over the pore formation depth.

In addition, the ultrasonic spraying method may employ an ultrasonic sprayer, and the ultrasonic sprayer may be at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

In addition, the thermal curing may include a process of curing at a temperature of 10°C to 350°C, and the photochemical curing may include a process of curing at a temperature of 30°C to 120°C with a UV lamp intensity of 200 mJ to 3000 mJ.

Here, the thermal curing process may preferably include curing at a temperature ranging from 12°C to 330°C, and more preferably at a temperature ranging from 15°C to 310°C.

In addition, the photochemical curing process may preferably include curing at a temperature ranging from 32°C to 118°C with a UV lamp intensity of 202 mJ to 2980 mJ, and more preferably at a temperature ranging from 35°C to 115°C with a UV lamp intensity of 205 mJ to 2950 mJ.

Further, the thermal curing may employ at least one curing agent selected from a group consisting of water, Di-(2,4-dichlorobenzoyl)-peroxide, Dibenzoyl peroxide, Dicumyl peroxide, tert-Butylcumylperoxide, Di-tert-butylperoxide, Isophorone Diisocyanate(IPDI), 4,4'-Diphenylmethane diisocyanate (MDI), Toluene Diisocyanate (TDI), Hexamethylene diisocyanate (HDI), and HDI Buiret.

Further, the photochemical curing may employ at least one curing agent selected from a group consisting of Di-(2,4-dichlorobenzoyl)-peroxide, Dibenzoyl peroxide, Dicumyl peroxide, tert-Butylcumylperoxide, Di-tert-butylperoxide, TPO (2,4,6-Trimethylbenzoyl diphenyl phosphine oxide), TPO-L (Ethyl(2,4,6-trimethylbenzoyl)henylphosphinate), BP (Benzophenone), MBP (4-Metylbenzophenone), DEB (4,4'-Bis(diethylamino)benzophenon), BMS (4-Benzoyl-4'-Methyldiphenylsulfide), MBF (Methyl phenlglyoxylate), MBB (Methyl o-benzoylbenzoate), PBZ (4-phenylbenzophenone), BDK (Benzildimethylketal), EHA (2-Ethlhexyl-4-Dimethylaminobenzoate), EPD (Ethyl-4-Dimethylaminobenzoate), 1173 (Hydroxy-2-methylphayl-propane-1-one), 184 (1-Hydroxycyclohexylphenylketon), ITX(Isopropylthioxanthone), DETX (2,4-diethylthioxanthone), 369 (2-Benzyl-2-(dimethylamino)-1-[4-(morpholinyl)phenyl]-1-butanone), 379 (2-Dimethylamino-2-(4-methylbenzyl)-1-(4-morpholin-4-yl-phenyl)butan-1-one), 819 (Bis(2,4,6-trimethylbenzoyl)-phenylphosphineoxide), and 1100 (Oligo [2-hydroxy-2-methyl-1-[4-(1-methylvinyl)phenyl] propanone]).

Moreover, an application of the porous polymer structure may include a separator, a composite material, a support, a soundproofing material, a thermal insulation material, a scaffold, or a combination thereof.

### Method for manufacturing a porous polymer structure through ultrasonic spraying

Another aspect of the present disclosure provides a manufacturing method for a porous polymer structure through ultrasonic spraying, wherein a spraying solution is atomized into microscale droplets, then infiltrated into a liquid polymer resin using an ultrasonic spraying method to form a porous structure, and subsequently cured to produce the porous polymer structure.

According to an exemplary embodiment of the present disclosure, there is provided a method for manufacturing a porous polymer structure through ultrasonic spraying, the method comprising steps of:
(a) preparing a spraying solution;
(b) preparing a substrate coated with a liquid polymer resin;
(c) atomizing the spraying solution into microscale droplets using an ultrasonic sprayer to produce a droplet dispersion;
(d) infiltrating the droplet dispersion into the substrate coated with the liquid polymer resin through an ultrasonic spraying method to form a porous structure; and
(e) conducting thermal curing or photochemical curing of the porous structure to manufacture the porous polymer structure,
wherein the ultrasonic spraying method may adjust spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

The present disclosure provides a manufacturing method for a porous polymer structure formed by ultrasonic spraying, in which a spraying solution is atomized into microscale droplets and then infiltrated into a liquid polymer resin using an ultrasonic spraying method to form a porous structure, followed by curing to produce the porous polymer structure.

As a result, the porous polymer structure and the manufacturing method enable large-area applications, offers excellent process stability, and are cost-effective due to the lowered manufacturing cost.

Here, the ultrasonic spraying method may adjust spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

In addition, in the ultrasonic spraying method,
the spraying distance may range from 1 mm to 1 m,
the spraying flow rate may range from 0.1 mL/min to 200 mL/min,
the spraying time may range from 5 seconds to 5 hours, and
the spraying pressure may range from 0.1 bar to 20 bar.

Here, when the spraying distance falls outside the specified range, the porosity of the porous polymer structure may decrease.

Here, the spraying distance in the ultrasonic spraying method may be preferably 1.2 mm to 0.98 m, and more preferably 1.5 mm to 0.95 m.

In addition, when the spraying flow rate falls outside the specified range, the porosity of the porous polymer structure may decrease.

Here, the spraying flow rate in the ultrasonic spraying method may be preferably 0.2 mL/min to 198 mL/min, and more preferably 0.32 mL/min to 195 mL/min.

Further, when the spraying time falls outside the specified range, the porosity of the porous polymer structure may decrease.

Here, the spraying time in the ultrasonic spraying method may be preferably 8 seconds to 4.98 hours, and more preferably 10 seconds to 4.95 hours.

In addition, when the spraying pressure falls outside the specified range, the porosity of the porous polymer structure may decrease.

Here, the spraying pressure in the ultrasonic spraying method may be preferably 0.12 bar to 19.8 bar, and more preferably 0.15 bar to 19.5 bar.

In addition, in the present disclosure, deionized water is atomized using an ultrasonic generator, forming a mist that penetrates the polymer. Since the viscosity of the liquid polymer resin is higher than that of the water droplets, the sprayed water droplets can be maintained spherical shape within the polymer. As the liquid polymer resin undergoes thermal curing or photochemical curing, a porous structure can be formed.

Here, when the liquid polymer containing infiltrated water droplets is heated, the internal water droplets evaporate while a polymerization reaction occurs, leaving behind droplet-shaped voids as the curing process progresses.

In addition, as the infiltrated water droplets evaporate while remaining entangled, the structure can exhibit a highly interconnected pore network.

In other words, the simultaneous occurrence of phase separation due to the infiltration of the solution into the liquid polymer and the polymerization reaction enables the formation of an internal interconnected pore network, thereby achieving high porosity.

Therefore, the porous structure obtained through the ultrasonic spray device can be produced over a large area using a uniform and simple process, making it applicable to various industries.

Moreover, the porous structure fabricated using the ultrasonic spray device is created by spraying a solution that does not mix well with the material intended for the porous structure. This characteristic ensures that the manufacturing conditions are not stringent, allowing the method to be applied to various materials and enabling production in multiple forms.

In addition, the porous structure manufactured using the ultrasonic spray device involves dispersing a atomized solution onto a liquid polymer material through ultrasonic or pneumatic spraying, enabling the production of a structure with an internal interconnected pore network.

Furthermore, depending on the properties of the polymer, various solutions can be used to form different structures, allowing the formation of interconnected pore networks in various materials. The ability to design the desired pore structure according to the spraying conditions makes this method particularly useful in industrial fields requiring porous structure design, such as separators or composite materials.

Further, in the present disclosure, by modifying the spraying conditions of the ultrasonic spray, the pore sizes and distributions can be controlled.

Here, the ultrasonic spraying method allows for variations in droplet size and distribution depending on factors such as spraying distance, spraying flow rate, spraying pressure, and spraying time.

In particular, as the spraying time increases, repeatedly infiltrated water droplets through ultrasonic spraying coalescence, leading to an increase in pore size. During the curing process, the water droplets evaporate, causing the liquid polymer to cure in an expanded state, resulting in increased thickness.

In addition, as the spraying flow rate increases, the size of the water droplets sprayed through ultrasonic spraying also increases, allowing relatively larger water droplets to infiltrate the liquid polymer.

Furthermore, as the spraying pressure increases, the ejection velocity of sprayed water droplet increases, allowing deeper penetration into the liquid polymer, thereby enabling control over the pore formation depth.

In addition, in the step (a) of preparing a spraying solution,
the spraying solution may include at least one solvent selected from a group consisting of water, alcohol, ketone, and glycol.

Here, the alcohol may include an alcohol having 1 to 20 carbon atoms.

In addition, the alcohol may include an amino alcohol having 1 to 20 carbon atoms.

Further, the ketone may include a ketone having 1 to 10 carbon atoms.

Moreover, the glycol may include a glycol having 1 to 20 carbon atoms.

Here, the glycol may include any one selected from a group consisting of ethylene glycol, diethylene glycol, triethylene glycol, tetraethylene glycol, and propylene glycol.

In addition, the substrate may be made of at least one selected from a group consisting of glass, plastic, porcelain, ceramic, metal, and fiber.

Further, in the step (b) of preparing a substrate coated with a liquid polymer resin,
the liquid polymer resin may be at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

Here, the liquid polymer resin may be a resin in a liquid form that is spread on the substrate.

In addition, in the step (c) of atomizing the spraying solution into microscale droplets using an ultrasonic sprayer to produce a droplet dispersion,
the ultrasonic sprayer may be at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

Further, in the step (d) of infiltrating the droplet dispersion into the substrate coated with the liquid polymer resin through an ultrasonic spraying method to form a porous structure,
a morphology of the porous structure may vary depending on the spraying amount of the droplet dispersion infiltrated into the liquid polymer resin.

Further, the ultrasonic spraying method may adjust spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

In addition, in the step (e) of conducting thermal curing or photochemical curing of the porous structure to manufacture the porous polymer structure,
the thermal curing may include a process of curing at a temperature of 10°C to 350°C, and the photochemical curing may include a process of curing at a temperature of 30°C to 120°C with a UV lamp intensity of 200 mJ to 3000 mJ.

Here, the thermal curing process may preferably include curing at a temperature ranging from 12°C to 330°C, and more preferably at a temperature ranging from 15°C to 310°C.

In addition, the photochemical curing process may preferably include curing at a temperature ranging from 32°C to 118°C with a UV lamp intensity of 202 mJ to 2980 mJ, and more preferably at a temperature ranging from 35°C to 115°C with a UV lamp intensity of 205 mJ to 2950 mJ.

In addition, the thermal curing may employ at least one curing agent selected from a group consisting of water, Di-(2,4-dichlorobenzoyl)-peroxide, Dibenzoyl peroxide, Dicumyl peroxide, tert-Butylcumylperoxide, Di-tert-butylperoxide, Isophorone Diisocyanate(IPDI), 4,4'-Diphenylmethane diisocyanate (MDI), Toluene Diisocyanate (TDI), Hexamethylene diisocyanate (HDI), and HDI Buiret.

Further, the photochemical curing may employ at least one curing agent selected from a group consisting of Di-(2,4-dichlorobenzoyl)-peroxide, Dibenzoyl peroxide, Dicumyl peroxide, tert-Butylcumylperoxide, Di-tert-butylperoxide, TPO (2,4,6-Trimethylbenzoyl diphenyl phosphine oxide), TPO-L (Ethyl(2,4,6-trimethylbenzoyl)henylphosphinate), BP (Benzophenone), MBP (4-Metylbenzophenone), DEB (4,4'-Bis(diethylamino)benzophenon), BMS (4-Benzoyl-4'-Methyldiphenylsulfide), MBF (Methyl phenlglyoxylate), MBB (Methyl o-benzoylbenzoate), PBZ (4-phenylbenzophenone), BDK (Benzildimethylketal), EHA (2-Ethlhexyl-4-Dimethylaminobenzoate), EPD (Ethyl-4-Dimethylaminobenzoate), 1173 (Hydroxy-2-methylphayl-propane-1-one), 184 (1-Hydroxycyclohexylphenylketon), ITX(Isopropylthioxanthone), DETX (2,4-diethylthioxanthone), 369 (2-Benzyl-2-(dimethylamino)-1-[4-(morpholinyl)phenyl]-1-butanone), 379 (2-Dimethylamino-2-(4-methylbenzyl)-1-(4-morpholin-4-yl-phenyl)butan-1-one), 819 (Bis(2,4,6-trimethylbenzoyl)-phenylphosphineoxide), and 1100 (Oligo [2-hydroxy-2-methyl-1-[4-(1-methylvinyl)phenyl] propanone]).

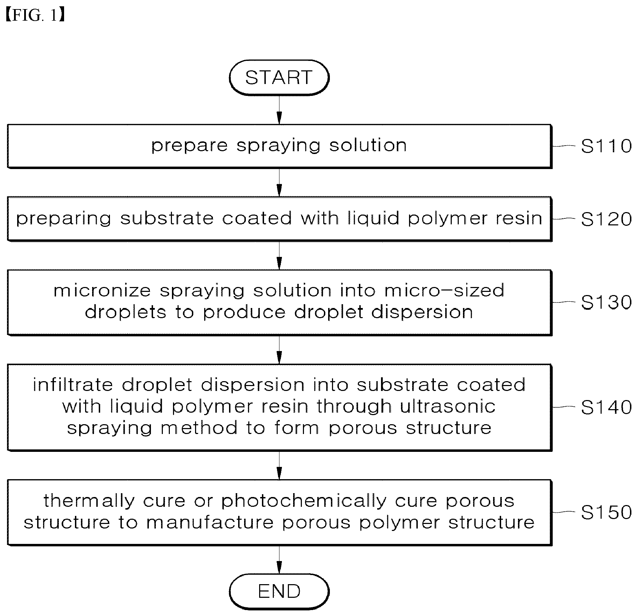

FIG. 1 is a process diagram of the manufacturing method for a porous polymer structure formed by ultrasonic spraying according to an exemplary embodiment of the present disclosure.

Referring to FIG. 1, the spraying solution may be prepared (S110), and then a substrate coated with a liquid polymer resin may be prepared (S120).

After that, the spraying solution may be atomized into microscale droplets using an ultrasonic sprayer to form a droplet dispersion (S130).

Then, the droplet dispersion may be infiltrated into the substrate coated with the liquid polymer resin through an ultrasonic spraying method to form a porous structure (S140).

Subsequently, the porous structure may be subjected to thermal curing or photochemical curing to manufacture a porous polymer structure (S150).

Hereinafter, the present disclosure will be described in more detail through exemplary embodiments. However, the following exemplary embodiments are provided to further illustrate the present disclosure, and the scope of the present disclosure is not limited to these exemplary embodiments. The following exemplary embodiments may be appropriately modified or altered by those skilled in the art within the scope of the present disclosure.

### <Exemplary embodiments>

### <Exemplary embodiment 1> Manufacturing Porous Polydimethylsiloxane (PDMS) Polymer Structure through Ultrasonic Spraying

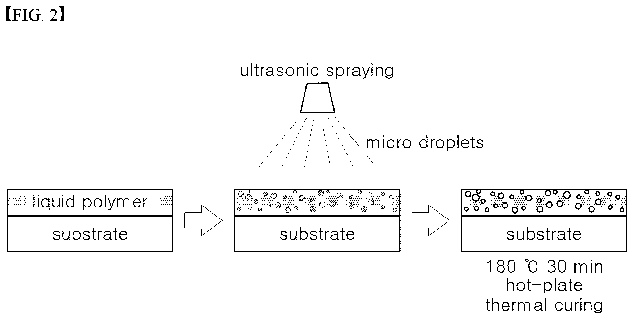

A porous polydimethylsiloxane (PDMS) polymer structure was manufactured through ultrasonic spraying following the process shown in FIG. 2.

Referring to FIG. 2, 100 g of polydimethylsiloxane (PDMS) and 5 g of Di-(2,4-dichlorobenzoyl)-peroxide were mixed, and the resulting solution was coated onto a glass substrate using a spin-coater at 1000 rpm for 3 minutes to prepare a substrate coated with a liquid polymer resin.

Subsequently, 50 g of deionized water was atomized into microscale droplets using a mechanical ultrasonic sprayer to prepare a droplet dispersion as the spraying solution.

Then, the droplet dispersion was infiltrated into the substrate coated with the liquid polymer resin using an ultrasonic spraying method with a spraying distance of 100 mm, a spraying flow rate of 1 to 3 mL/min, a spraying time of 200 to 600 seconds, and a spraying pressure of 1 to 2 bar using a mechanical ultrasonic sprayer, thereby forming a porous structure.

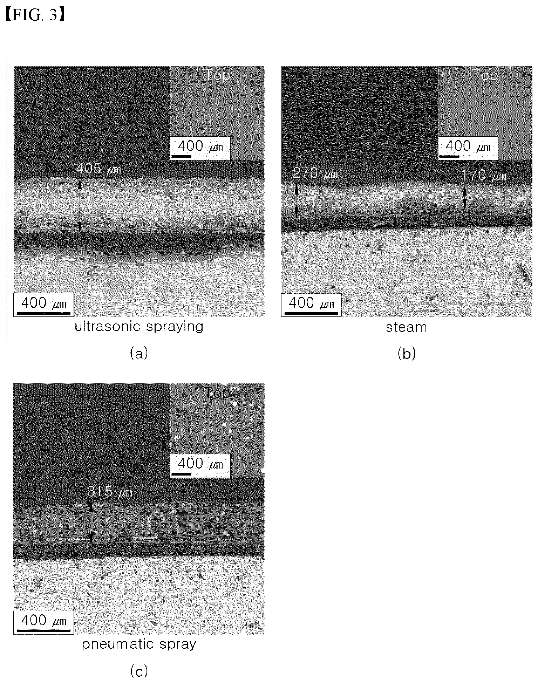

Afterward, the porous structure was thermally cured at 180°C for 1 hour on a hot plate to fabricate a porous polydimethylsiloxane (PDMS) polymer structure via ultrasonic spraying, as shown in FIG. 3a.

Referring to FIG. 3a, the porous PDMS polymer structure fabricated in Exemplary embodiment 1 exhibited well-formed porosity, with a cross-sectional pore thickness of 405 *µ*m.

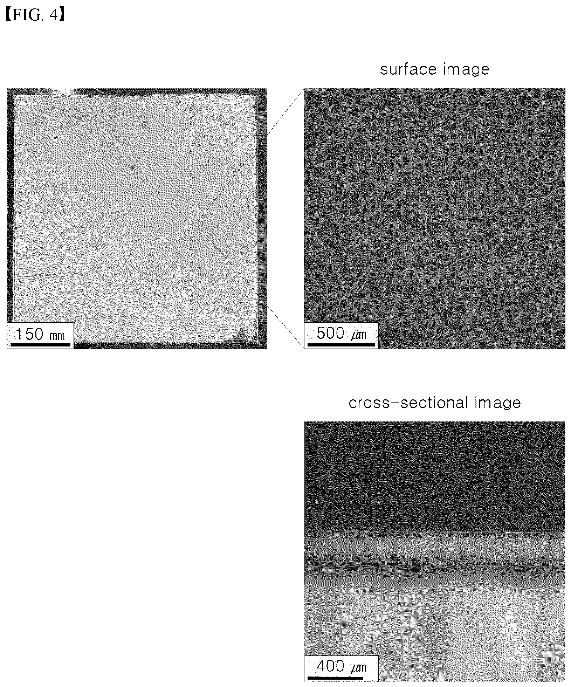

In addition, FIG. 4 presents optical microscope and SEM images showing the surface and cross-sectional morphology of the porous polymer structure fabricated using the ultrasonic spraying method of Exemplary embodiment 1.

Referring to FIG. 4, the porous PDMS polymer structure fabricated in Exemplary embodiment 1 was confirmed to embed microscale pores in the optical microscope surface image.

Furthermore, the cross-sectional SEM image of the porous PDMS polymer structure fabricated in Exemplary embodiment 1 confirmed the cross-section with microscale pores .

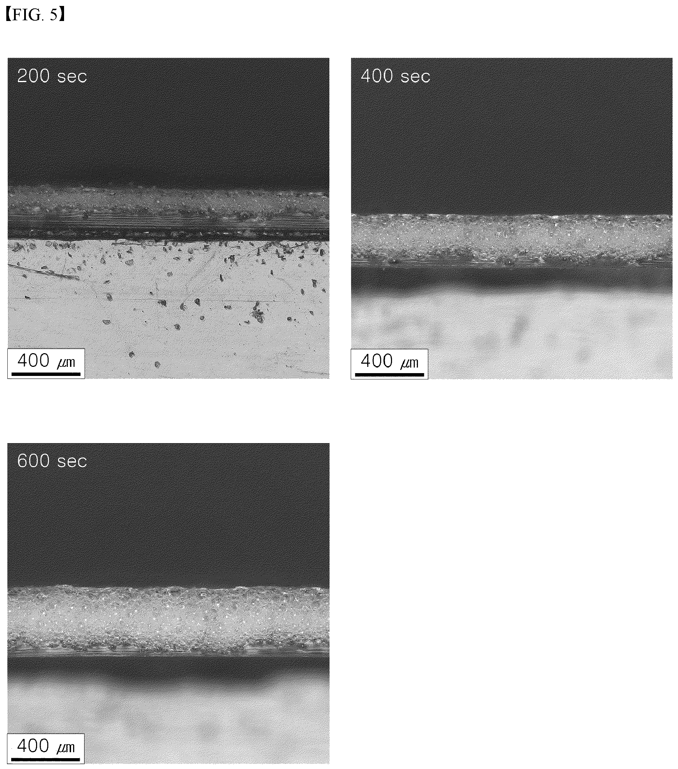

FIG. 5 shows the cross-sectional SEM images of the porous polymer structure at different ultrasonic spraying times in the ultrasonic spraying method of Exemplary embodiment 1.

Referring to FIG. 5, it is confirmed that, in the porous PDMS polymer structure fabricated in Exemplary embodiment 1, as the ultrasonic spraying time increased from 200 to 600 seconds, the cross-sectional thickness of the microscale pores increased.

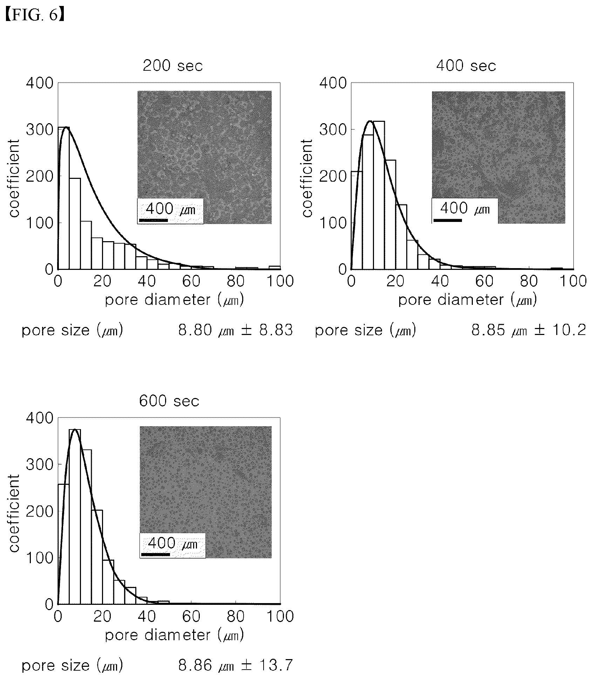

In addition, FIG. 6 illustrates the pore size distribution of the porous polymer structure at different ultrasonic spraying times in the ultrasonic spraying method of Exemplary embodiment 1.

Referring to FIG. 6, it is confirmed that, in the porous PDMS polymer structure fabricated in Exemplary embodiment 1, as the ultrasonic spraying time increased from 200 to 600 seconds, the maximum pore size is increased, and the average pore size also increased.

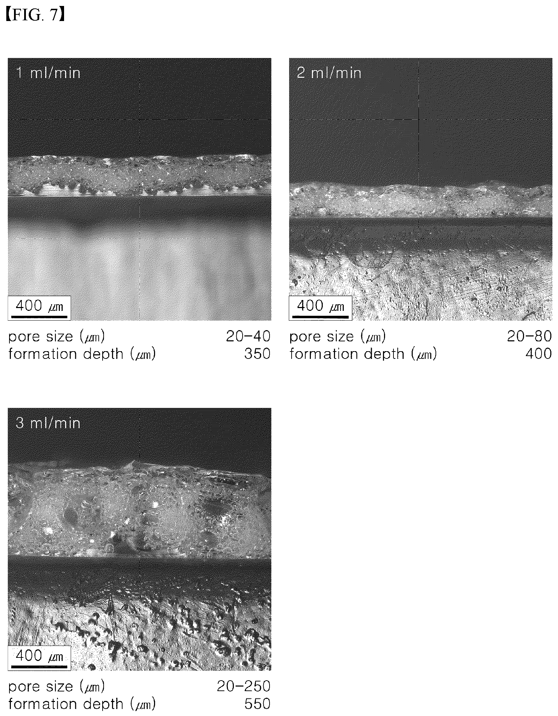

In addition, FIG. 7 presents cross-sectional SEM images showing the effect of ultrasonic spraying flow rate on the pore size and cross-sectional thickness of the porous polymer structure in the ultrasonic spraying method of Exemplary embodiment 1.

Referring to FIG. 7, it is confirmed that, in the porous PDMS polymer structure fabricated in Exemplary embodiment 1, as the ultrasonic spraying flow rate increased from 1 ml/min to 3 ml/min, the pore size is increased, and the pore formation depth (cross-sectional thickness) also increased.

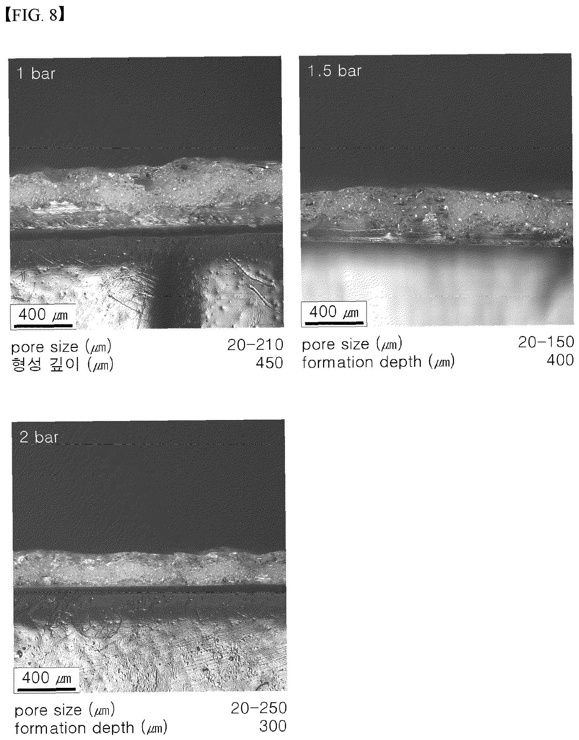

In addition, FIG. 8 represents cross-sectional SEM images showing the effect of ultrasonic spraying pressure on the pore size and cross-sectional thickness of the porous polymer structure in the ultrasonic spraying method of exemplary embodiment 1.

Referring to FIG. 8, it is confirmed that, in the porous PDMS polymer structure fabricated in Exemplary embodiment 1, as the ultrasonic spraying pressure increased from 1 bar to 2 bar, the pore size is increased, while the pore formation depth (cross-sectional thickness) decreased.

### <Exemplary embodiments 2 to 10> Manufacturing Porous Polymer Structures through Ultrasonic Spraying

Porous polymer structures were manufactured through ultrasonic spraying using the same method as in Exemplary embodiment 1, except that the polymer resin components, droplet dispersion preparation method, ultrasonic spraying conditions, and curing conditions were applied as specified in Table 1 below.

**[Table 1]**

| | Liquid Polymer Resin | Curing Agent | Coating Method | Spraying Solution | Ultrasonic Sprayer | Spraying Distance (mm) | Spraying Flow Rate (mL/min) | Spraying Time (s) | Spraying Pressure (bar) | Curing Method |
|---|---|---|---|---|---|---|---|---|---|---|
| Exemplary embodime nt 1 | PDMS | Di-(2,4-dichlorobenz oyl)-peroxide | Spin Coating | Water | Mechanical Ultrasonic Sprayer | 100 | 1~3 | 200-600 | 1~2 | Thermal curing on a hot plate at 180°C for 1 hour |
| Exemplary embodime nt 2 | PDMS | Moisture | Spin Coating | Alcohol | Mesh Ultrasonic Sprayer | 500 | 3~5 | 600~120 0 | 2~5 | Oven thermal curing at 200°C for 1 hour |
| Exemplary embodime nt 3 | PDMS | Dicumyl peroxide | Dip Coating | Alcohol Solution | Piezoelectri c Ultrasonic Sprayer | 1000 | 5~10 | 1200~15 00 | 5~10 | Oven thermal curing at 150°C for 2 hours |
| Exemplary embodime nt 4 | PVDS | Di-(2,4-dichlorobenz oyl)-peroxide | Spin Coating | Water | Mechanical Ultrasonic Sprayer | 100 | 1~3 | 200-600 | 1~2 | Thermal curing on a hot plate at 180°C for 1 hour |
| Exemplary embodime nt 5 | PVDS | Moisture | Bar Coating | Alcohol | Mesh Ultrasonic Sprayer | 1000 | 5~10 | 600~120 0 | 2~5 | Oven thermal curing at 200°C for 1 hour |
| Exemplary embodime nt 6 | PMHS | Moisture | Dip Coating | Water | Piezoelectri c Ultrasonic Sprayer | 100 | 1~3 | 200-600 | 1~2 | Oven thermal curing at 180°C for 1 hour |
| Exemplary embodime nt 7 | PMHS | Dicumyl peroxide | Spin Coating | Alcohol | Mechanical Ultrasonic Sprayer | 1000 | 5~10 | 600~120 0 | 2~5 | Photoche mical curing at 100°C, 1500 mJ |
| Exemplary embodime nt 8 | PEG | Di-(2,4-dichlorobenz oyl)-peroxide | Dip Coating | Water | Cavitation Ultrasonic Sprayer | 100 | 1~3 | 200-600 | 1~2 | Photoche mical curing at 100°C, 1500 mJ |
| Exemplary embodime nt 9 | PEO | Moisture | Spin Coating | Alcohol | Capillary Wave Ultrasonic Sprayer | 500 | 3~5 | 600~120 0 | 2~5 | Oven thermal curing at 180°C for 1 hour |
| Exemplary embodime nt 10 | PPG | Dicumyl peroxide | Bar Coating | Alcohol Solution | Mechanical Ultrasonic Sprayer | 1000 | 5~10 | 1200~15 00 | 5~10 | Photoche mical curing at 80°C, 2000 mJ |

### <Comparative example 1> Manufacturing Porous Polymer Structure through Steam Treatment

A porous polymer structure was fabricated via steam treatment by placing 100 g of polydimethylsiloxane (PDMS) into a high-temperature, high-pressure chamber containing 50 g of deionized water. Steam was generated, allowing water particles within the steam to infiltrate the PDMS, thereby forming a porous polymer structure via steam treatment, as shown in FIG. 3b.

Referring to FIG. 3b, the cross-sectional thickness of porous polymer structure manufactured through steam treatment in Comparative example 1 was 170 ~ 270 *µ*m, which was thinner than the cross-sectional thickness of the porous polymer structure fabricated via ultrasonic spraying in Exemplary embodiment 1.

### <Comparative example 2> Manufacturing Porous Polymer Structure through Pneumatic Spray

A porous polymer structure was fabricated via pneumatic spray by atomizing 50 g of deionized water using pneumatic pressure and spraying the resulting water particles onto 100 g of polydimethylsiloxane (PDMS) through a nozzle, allowing the water particles to infiltrate the PDMS, thereby forming a porous polymer structure via pneumatic spray, as shown in FIG. 3c.

Referring to FIG. 3c, the cross-sectional thickness the porous polymer structure manufactured through pneumatic spray in Comparative example 2 was 315 *µ*m, which was thinner than cross-sectional thickness of the porous polymer structure fabricated via ultrasonic spraying in Exemplary embodiment 1.

In the above, exemplary embodiments of the polymer structure through ultrasonic spraying and a manufacturing method therefor according to the present disclosure have been described. Moreover, it will be appreciated that various modifications to these exemplary embodiments are possible without departing from the scope of the present disclosure.

The scope of the present disclosure should therefore not be limited to those exemplary embodiments described above, but should be defined by the following claims and their equivalents.

In other words, the foregoing exemplary embodiments are to be understood as illustrative rather than restrictive in all respects, and the scope of the present disclosure is indicated by the following claims rather than the detailed description. All modifications or variations derived from the meaning, scope, and equivalent concepts of the claims should be interpreted as being included within the scope of the present disclosure.

### [Industrial Applicability]

The porous polymer structure according to an exemplary embodiment of the present disclosure may be applied a separator, a composite material, a support, a soundproofing material, a thermal insulation material, a scaffold, or a combination thereof.

## Claims

1. A porous polymer structure through ultrasonic spraying, the porous polymer structure comprising:
microscale pores within or on a surface of a polymer structure,
wherein the porous polymer structure with microscale pores is formed by atomizing a spraying solution into microscale droplets to produce a droplet dispersion, infiltrating the droplet dispersion into a substrate coated with a liquid polymer resin through an ultrasonic spraying method to form a porous structure, and subsequently conduct thermal curing or photochemical curing of the porous structure.

2. The porous polymer structure of claim 1,
wherein a porosity of the porous polymer structure includes:
a specific surface area ranging from 10 m²/g to 1000 m²/g; and
a pore size ranging from 1 *µ*m to 500 *µ*m.

3. The porous polymer structure of claim 1,
wherein a surface morphology of the porous polymer structure includes a sponge-like shape formed with pores, and
wherein a cross-sectional thickness of the porous polymer structure ranges from 10 *µ*m to 5 mm.

4. The porous polymer structure of claim 1,
wherein the spraying solution includes at least one solvent selected from a group consisting of water, alcohol, ketone, and glycol.

5. The porous polymer structure of claim 1,
wherein the liquid polymer resin is at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

6. The porous polymer structure of claim 1,
wherein the substrate is made of at least one selected from a group consisting of glass, plastic, porcelain, ceramic, metal, and fiber.

7. The porous polymer structure of claim 1,
wherein a size of a droplet in the droplet dispersion ranges from 1 Å to 20 *µ*m.

8. The porous polymer structure of claim 1,
wherein a morphology of the porous structure varies depending on spraying amount of the droplet dispersion infiltrated into the liquid polymer resin.

9. The porous polymer structure of claim 1,
wherein the ultrasonic spraying method adjusts spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

10. The porous polymer structure of claim 1,
wherein the ultrasonic spraying method employs an ultrasonic sprayer, and
wherein the ultrasonic sprayer is at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

11. The porous polymer structure of claim 1,
wherein the thermal curing employs at least one curing agent selected from a group consisting of water, Di-(2,4-dichlorobenzoyl)-peroxide, Dibenzoyl peroxide, Dicumyl peroxide, tert-Butylcumylperoxide, Di-tert-butylperoxide, Isophorone Diisocyanate(IPDI), 4,4'-Diphenylmethane diisocyanate (MDI), Toluene Diisocyanate (TDI), Hexamethylene diisocyanate (HDI), and HDI Buiret.

12. The porous polymer structure of claim 1,
wherein the photochemical curing employs at least one curing agent selected from a group consisting of Di-(2,4-dichlorobenzoyl)-peroxide, Dibenzoyl peroxide, Dicumyl peroxide, tert-Butylcumylperoxide, Di-tert-butylperoxide, TPO (2,4,6-Trimethylbenzoyl diphenyl phosphine oxide), TPO-L (Ethyl(2,4,6-trimethylbenzoyl)henylphosphinate), BP (Benzophenone), MBP (4-Metylbenzophenone), DEB (4,4'-Bis(diethylamino)benzophenon), BMS (4-Benzoyl-4'-Methyldiphenylsulfide), MBF (Methyl phenlglyoxylate), MBB (Methyl o-benzoylbenzoate), PBZ (4-phenylbenzophenone), BDK (Benzildimethylketal), EHA (2-Ethlhexyl-4-Dimethylaminobenzoate), EPD (Ethyl-4-Dimethylaminobenzoate), 1173 (Hydroxy-2-methylphayl-propane-1-one), 184 (1-Hydroxycyclohexylphenylketon), ITX(Isopropylthioxanthone), DETX (2,4-diethylthioxanthone), 369 (2-Benzyl-2-(dimethylamino)-1-[4-(morpholinyl)phenyl]-1-butanone), 379 (2-Dimethylamino-2-(4-methylbenzyl)-1-(4-morpholin-4-yl-phenyl)butan-1-one), 819 (Bis(2,4,6-trimethylbenzoyl)-phenylphosphineoxide), and 1100 (Oligo [2-hydroxy-2-methyl-1-[4-(1-methylvinyl)phenyl] propanone]).

13. The porous polymer structure of any one of claims 1 to 12,
wherein an application of the porous polymer structure includes a separator, a composite material, a support, a soundproofing material, a thermal insulation material, a scaffold, or a combination thereof.

14. A method for manufacturing a porous polymer structure through ultrasonic spraying, the method comprising steps of:
(a) preparing a spraying solution;
(b) preparing a substrate coated with a liquid polymer resin;
(c) atomizing the spraying solution into microscale droplets using an ultrasonic sprayer to produce a droplet dispersion;
(d) infiltrating the droplet dispersion into the substrate coated with the liquid polymer resin through an ultrasonic spraying method to form a porous structure; and
(e) conducting thermal curing or photochemical curing of the porous structure to manufacture the porous polymer structure,
wherein the ultrasonic spraying method adjusts spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

15. The method of claim 14,
wherein in the ultrasonic spraying method,
the spraying distance ranges from 1 mm to 1 m,
the spraying flow rate ranges from 0.1 mL/min to 200 mL/min,
the spraying time ranges from 5 seconds to 5 hours, and
the spraying pressure ranges from 0.1 bar to 20 bar.

16. The method of claim 14,
wherein, in the step (a) of preparing a spraying solution,
the spraying solution includes at least one solvent selected from a group consisting of water, alcohol, ketone, and glycol.

17. The method of claim 14,
wherein, in the step (b) of preparing a substrate coated with a liquid polymer resin,
the liquid polymer resin is at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

18. The method of claim 14,
wherein, in the step (c) of atomizing the spraying solution into microscale droplets using an ultrasonic sprayer to produce a droplet dispersion,
the ultrasonic sprayer is at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

19. The method of claim 14,
wherein, in the step (d) of infiltrating the droplet dispersion into the substrate coated with the liquid polymer resin through an ultrasonic spraying method to form a porous structure,
a morphology of the porous structure varies depending on the spraying amount of the droplet dispersion infiltrated into the liquid polymer resin.

20. The method of claim 14,
wherein, in the step (e) of conducting thermal curing or photochemical curing of the porous structure to manufacture the porous polymer structure,
the thermal curing includes a process of curing at a temperature of 10°C to 350°C, and
the photochemical curing includes a process of curing at a temperature of 30°C to 120°C with a UV lamp intensity of 200 mJ to 3000 mJ.

## Amended claims

### Amended claims under Art. 19.1 PCT

1. A porous polymer structure through ultrasonic spraying, the porous polymer structure comprising:
microscale pores within or on a surface of a polymer structure,
wherein the porous polymer structure with microscale pores is formed by atomizing a spraying solution into microscale droplets to produce a droplet dispersion, infiltrating the droplet dispersion into a substrate coated with a liquid polymer resin through an ultrasonic spraying method to form a porous structure, and subsequently conduct thermal curing or photochemical curing of the porous structure, and
wherein the porous polymer structure through ultrasonic spraying employs the droplet dispersion in which liquid drops are atomized.

2. The porous polymer structure of claim 1,
wherein a porosity of the porous polymer structure includes:
a specific surface area ranging from 10 m²/g to 1000 m²/g; and
a pore size ranging from 1 *µ*m to 500 *µ*m.

3. The porous polymer structure of claim 1,
wherein a surface morphology of the porous polymer structure includes a sponge-like shape formed with pores, and
wherein a cross-sectional thickness of the porous polymer structure ranges from 10 *µ*m to 5 mm.

4. The porous polymer structure of claim 1,
wherein the spraying solution includes at least one solvent selected from a group consisting of water, alcohol, ketone, and glycol.

5. The porous polymer structure of claim 1,
wherein the liquid polymer resin is at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

6. The porous polymer structure of claim 1,
wherein the substrate is made of at least one selected from a group consisting of glass, plastic, porcelain, ceramic, metal, and fiber.

7. The porous polymer structure of claim 1,
wherein a size of a droplet in the droplet dispersion ranges from 1 Å to 20 *µ*m.

8. The porous polymer structure of claim 1,
wherein a morphology of the porous structure varies depending on spraying amount of the droplet dispersion infiltrated into the liquid polymer resin.

9. The porous polymer structure of claim 1,
wherein the ultrasonic spraying method adjusts spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure.

10. The porous polymer structure of claim 1,
wherein the ultrasonic spraying method employs an ultrasonic sprayer, and
wherein the ultrasonic sprayer is at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

11. The porous polymer structure of claim 1,
wherein the thermal curing employs at least one curing agent selected from a group consisting of water, Di-(2,4-dichlorobenzoyl)-peroxide, Dibenzoyl peroxide, Dicumyl peroxide, tert-Butylcumylperoxide, Di-tert-butylperoxide, Isophorone Diisocyanate(IPDI), 4,4'-Diphenylmethane diisocyanate (MDI), Toluene Diisocyanate (TDI), Hexamethylene diisocyanate (HDI), and HDI Buiret.

12. The porous polymer structure of claim 1,
wherein the photochemical curing employs at least one curing agent selected from a group consisting of Di-(2,4-dichlorobenzoyl)-peroxide, Dibenzoyl peroxide, Dicumyl peroxide, tert-Butylcumylperoxide, Di-tert-butylperoxide, TPO (2,4,6-Trimethylbenzoyl diphenyl phosphine oxide), TPO-L (Ethyl(2,4,6-trimethylbenzoyl)henylphosphinate), BP (Benzophenone), MBP (4-Metylbenzophenone), DEB (4,4'-Bis(diethylamino)benzophenon), BMS (4-Benzoyl-4'-Methyldiphenylsulfide), MBF (Methyl phenlglyoxylate), MBB (Methyl o-benzoylbenzoate), PBZ (4-phenylbenzophenone), BDK (Benzildimethylketal), EHA (2-Ethlhexyl-4-Dimethylaminobenzoate), EPD (Ethyl-4-Dimethylaminobenzoate), 1173 (Hydroxy-2-methylphayl-propane-1-one), 184 (1-Hydroxycyclohexylphenylketon), ITX(Isopropylthioxanthone), DETX (2,4-diethylthioxanthone), 369 (2-Benzyl-2-(dimethylamino)-1-[4-(morpholinyl)phenyl]-1-butanone), 379 (2-Dimethylamino-2-(4-methyl-benzyl)-1-(4-morpholin-4-yl-phenyl)butan-1-one), 819 (Bis(2,4,6-trimethylbenzoyl)-phenylphosphineoxide), and 1100 (Oligo [2-hydroxy-2-methyl-1-[4-(1-methylvinyl)phenyl] propanone]).

13. The porous polymer structure of any one of claims 1 to 12,
wherein an application of the porous polymer structure includes a separator, a composite material, a support, a soundproofing material, a thermal insulation material, a scaffold, or a combination thereof.

14. A method for manufacturing a porous polymer structure through ultrasonic spraying, the method comprising steps of:
(a) preparing a spraying solution;
(b) preparing a substrate coated with a liquid polymer resin;
(c) atomizing the spraying solution into microscale droplets using an ultrasonic sprayer to produce a droplet dispersion;
(d) infiltrating the droplet dispersion into the substrate coated with the liquid polymer resin through an ultrasonic spraying method to form a porous structure; and
(e) conducting thermal curing or photochemical curing of the porous structure to manufacture the porous polymer structure,
wherein the ultrasonic spraying method adjusts spraying condition including at least one of spraying distance, spraying flow rate, spraying time, or spraying pressure, or a combination thereof, to control spraying amount of the droplet dispersion infiltrated into the liquid polymer resin, thereby controlling porosity, surface morphology, or cross-sectional thickness of the porous polymer structure, and
wherein the porous polymer structure through ultrasonic spraying employs the droplet dispersion in which liquid drops are atomized.

15. The method of claim 14,
wherein in the ultrasonic spraying method,
the spraying distance ranges from 1 mm to 1 m,
the spraying flow rate ranges from 0.1 mL/min to 200 mL/min,
the spraying time ranges from 5 seconds to 5 hours, and
the spraying pressure ranges from 0.1 bar to 20 bar.

16. The method of claim 14,
wherein, in the step (a) of preparing a spraying solution,
the spraying solution includes at least one solvent selected from a group consisting of water, alcohol, ketone, and glycol.

17. The method of claim 14,
wherein, in the step (b) of preparing a substrate coated with a liquid polymer resin, the liquid polymer resin is at least one selected from a group consisting of polydimethylsiloxane (PDMS), polymethylvinylsiloxane (PMVS), polymethylhydrosiloxane (PMHS), polyether modified polydimethylsiloxane, polymethylalkylsiloxane, polyethylene glycol (PEG), polyethylene oxide (PEO), polypropylene glycol (PPG), polypropylene oxide (PPO), urethane acrylate, urethane methacrylate, epoxy acrylate, epoxy methacrylate, trimethylolpropane triacrylate, trimethylolpropane (EO)n triacrylate, trimethylolpropane trimethacrylate, and trimethylolpropane (EO)n trimethacrylate.

18. The method of claim 14,
wherein, in the step (c) of atomizing the spraying solution into microscale droplets using an ultrasonic sprayer to produce a droplet dispersion,
the ultrasonic sprayer is at least one selected from a group consisting of a mechanical ultrasonic sprayer, a mesh ultrasonic sprayer, a piezoelectric ultrasonic sprayer, a cavitation ultrasonic sprayer, and a capillary wave ultrasonic sprayer.

19. The method of claim 14,
wherein, in the step (d) of infiltrating the droplet dispersion into the substrate coated with the liquid polymer resin through an ultrasonic spraying method to form a porous structure,
a morphology of the porous structure varies depending on the spraying amount of the droplet dispersion infiltrated into the liquid polymer resin.

20. The method of claim 14,
wherein, in the step (e) of conducting thermal curing or photochemical curing of the porous structure to manufacture the porous polymer structure,
the thermal curing includes a process of curing at a temperature of 10°C to 350°C, and
the photochemical curing includes a process of curing at a temperature of 30°C to 120°C with a UV lamp intensity of 200 mJ to 3000 mJ.
